# FASCICULE DE BREVET EUROPEEN

(11) **EP 0 770 789 B1**
(45) Date de publication et mention de la délivrance du brevet: **06.03.2002**
(21) Numéro de dépôt: 96402159.6
(22) Date de dépôt: 11.10.1996
(51) Int. Cl.: F16D 25/08

(54) **Dispositif hydraulique de manoeuvre d'embrayage**
Hydraulische Kupplungsbetätigungsvorrichtung
Hydraulic clutch-actuating device

(30) Priorité: 24.10.1995 FR 9512517; 26.02.1996 FR 9602350
(43) Date de publication de la demande: 02.05.1997
(73) Titulaire: SKF FRANCE, F-92140 Clamart (FR)
(72) Inventeur: Arnault, Benoit, 37000 Tours (FR); Poulle, Thierry, 37370 Neuvy-le-Roi (FR); Ponson, Frédéric, 37230 Luynes (FR); Defossez, Marc, 3984 AX Odijk (NL); Coquelin, Jean-Philippe, 37100 Tours (FR)
(74) Mandataire: Casalonga, Axel

(56) Documents cités:
- EP-A- 0 177 212
- EP-A- 0 543 721
- DE-A- 4 141 810
- FR-A- 2 149 821
- FR-A- 2 559 861
- FR-A- 2 688 560

## Description

La présente invention concerne des dispositifs de manoeuvre d'embrayage fonctionnant en contact permanent avec un élément du diaphragme du mécanisme d'embrayage d'un véhicule automobile.

Ce type de dispositif de manoeuvre d'embrayage comprend :
- un palier de butée à roulement dont la bague tournante vient en contact de façon continue avec le diaphragme du mécanisme d'embrayage,
- un dispositif de commande hydraulique comprenant une partie fixe solidarisée avec le carter de boîte de vitesse et formant cylindre et une partie mobile formant piston, mobile axialement, venant agir sur le roulement de butée et déplacer ainsi ce dernier axialement par rapport au mécanisme d'embrayage,
- un moyen de mise en précontrainte axiale du roulement contre le diaphragme du mécanisme d'embrayage, en général un ressort, interposé entre une partie fixe et une partie mobile du mécanisme hydraulique, et
- un soufflet disposé entre une partie fixe et une partie mobile du mécanisme d'embrayage pour former un espace clos protégeant les éléments du mécanisme d'embrayage.

On connaît par le certificat d'utilité français n° 89 16 784, FR-A-2 641 049, un dispositif hydraulique de manoeuvre d'embrayage comprenant une pièce formant siège d'appui du ressort, réalisée en matière plastique et venant coiffer un capuchon en tôle dans lequel est disposé le roulement de butée d'embrayage. Le capuchon en tôle est fixé sur un manchon coulissant au moyen d'une bague de fixation et une rondelle élastique ondulée est disposée axialement entre le capuchon de tôle et la bague extérieure du roulement contre un disque d'appui lié au capuchon de tôle en soumettant ce palier à une précontrainte axiale.

Un tel dispositif requiert donc un grand nombre de pièces, à savoir, un capuchon intermédiaire en tôle, un disque d'appui, une rondelle ondulée, une bague de fixation et une pièce de sûreté pour le transport sous forme d'une bande de matière plastique.

Le brevet américain n° 4 585 106 décrit un mécanisme de butée d'embrayage à commande hydraulique dans lequel la pièce formant siège d'appui pour l'extrémité mobile du ressort est fixée par rivetage sur une pièce intermédiaire en contact avec la bague non tournante du roulement de butée. Le dispositif met en oeuvre un grand nombre de pièces et exige également des bandes de maintien axial de la butée sur le reste du mécanisme avant le montage.

Le document DE-A- 41 41 810 décrit un dispositif débrayeur comprenant un roulement muni d'une bague extérieure et d'une bague intérieure capable d'agir sur un ressort-membrane, un dispositif débrayeur hydraulique pourvu d'un cylindre annulaire et d'un piston apte à exercer une poussée sur le roulement. Un ressort de poussée maintient la bague intérieure en contact avec le ressort-membrane. Un anneau de retenue transmet la poussée du ressort de poussée à la bague extérieure. Un soufflet de protection est disposé entre le cylindre et l'anneau de retenue.

De plus, les dimensions axiales de la pièce formant siège d'appui ont une influence sur l'encombrement axial global du dispositif.

La présente invention a donc pour objet un dispositif hydraulique de manoeuvre d'embrayage économique, compact et comportant un moins grand nombre de pièces que les dispositifs connus.

La présente invention également pour objet un dispositif hydraulique de manoeuvre d'embrayage dont la pièce formant siège d'appui du ressort comprend des moyens de solidarisation axiale et des moyens de solidarisation angulaire avec la bague non tournante du roulement du butée.

Selon l'invention le dispositif de manoeuvre d'embrayage est du type comprenant un roulement de butée, muni d'une bague non tournante et d'une bague tournante, capable d'agir sur un diaphragme de mécanisme d'embrayage, un dispositif de commande hydraulique pourvu d'une partie fixe solidarisée avec un carter et une partie mobile axialement capable de déplacer le roulement de butée par rapport au mécanisme d'embrayage, un moyen de mise en précontrainte axiale du roulement de butée contre le diaphragme, une pièce de liaison formant siège d'appui du moyen de mise en précontrainte axiale, et un soufflet de protection disposé entre une partie mobile et une partie fixe du dispositif. La pièce de liaison, disposée entre le roulement et le moyen de mise en précontrainte axiale, comprend des moyens de solidarisation axiale comprenant au moins une portion cylindrique élastique, munie à une extrémité libre s'étendant en direction du roulement, d'un bourrelet annulaire capable de solidariser axialement ladite pièce de liaison et la bague non tournante et pourvu d'une surface radiale en contact avec une surface radiale correspondante de la bague non tournante, et des moyens de solidarisation angulaire avec la bague non tournante du roulement de butée. La pièce de liaison étant angulairement solidaire du ressort, lui-même angulairement solidaire de la partie fixe du dispositif, on évite ainsi la mise en rotation accidentelle de la bague non tournante sous l'effet du couple de frottement du roulement dû à sa rotation.

Dans un mode de réalisation de l'invention, la pièce de liaison est montée concentriquement à un élément de poussée de la partie mobile et de façon à être en retrait axialement, par rapport à l'extrémité libre de l'élément de poussée. Un tel montage permet d'obtenir un dispositif de manoeuvre d'embrayage de faible encombrement axial quel que soit l'encombrement axial de la pièce de liaison.

Dans un mode de réalisation de l'invention, la pièce de liaison est en contact avec une surface radiale de la bague non tournante et la portion cylindrique de la pièce de liaison est en contact avec une surface cylindrique de la bague non tournante. La portion cylindrique peut être en contact avec un alésage de la bague non tournante, le bourrelet étant logé dans une rainure annulaire dudit alésage.

Dans un mode de réalisation de l'invention, la portion cylindrique est en contact avec un diamètre extérieur de la bague non tournante. Dans ce cas, la portion cylindrique peut être munie d'une pluralité de portions de bourrelet coopérant avec des encoches de la bague non tournante. Ces portions de bourrelet sont capables d'assurer à la fois la solidarisation axiale et angulaire avec la bague non tournante. La rainure de la bague non tournante peut être fabriquée par estampage à plat d'un flan de tôle puis emboutissage pour conférer à la bague sa forme définitive.

Dans un mode de réalisation de l'invention la portion cylindrique est scindée en une pluralité de secteurs séparés par des fentes axiales ou scindée en une pluralité de secteurs formant des languettes axiales et séparés par des créneaux.

Dans un mode de réalisation de l'invention, la bague non tournante est pourvue d'une rainure annulaire discontinue et scindée en portions de rainure, les extrémités des portions de rainure formant des butées de solidarisation angulaire avec le bourrelet des secteurs de portion cylindrique.

La bague non tournante peut être pourvue d'une encoche qui coopère avec un ergot axial ou une portion cylindrique formant un moyen de solidarisation angulaire.

Dans un autre mode de réalisation de l'invention, chaque portion cylindrique se compose d'un pion axial fendu destiné à coopérer avec un trou de la bague non tournante, chaque pion étant capable de se rétreindre pour rentrer dans le trou correspondant puis de s'expandre radialement en assurant la solidarisation axiale et angulaire de la pièce de liaison avec la bague non tournante.

De préférence, la pièce de liaison comprend une gorge annulaire de solidarisation avec le soufflet.

L'invention sera mieux comprise à l'étude de la description détaillée de quelques modes de réalisation pris à titre d'exemples nullement limitatifs et illustrés par les dessins annexés sur lesquels :
la figure 1 ests une coupe en élévation du dispositif selon l'invention;
la figure 2 est une demi-coupe en élévation d'une bague intérieure de roulement et d'une pièce de liaison selon un mode de réalisation de l'invention;
la figure 3 est une demi-coupe semblable à la figure 2 mais montrant le montage de la pièce de liaison sur la bague non tournante;
la figure 4 est une demi-coupe en élévation d'une pièce de liaison selon l'invention munie d'un ergot;
la figure 5 est une vue extérieure d'une partie de la bague non tournante d'un roulement munie d'une encoche;
la figure 6 est une demi-coupe en élévation d'une pièce de liaison selon l'invention munie de languettes;
les figures 7 et 8 sont des demi-coupes en élévation d'une bague non tournante et d'une pièce de liaison selon deux autres modes de réalisation de l'invention;
la figure 9 est une vue extérieure de détail du mode de réalisation de la figure 8;
la figure 10 est une demi-coupe en élévation d'une pièce de liaison selon le mode de réalisation illustré par la figure 8;
la figure 11 est une demi-coupe en élévation d'une bague non tournante et d'une pièce de liaison munie de pions selon l'invention;
la figure 12 est une demi-coupe en élévation d'un dispositif de manoeuvre d'embrayage selon un autre mode de réalisation de l'invention; et
la figure 13 est une vue de détail en demi-coupe d'un bague non tournante et d'une pièce de liaison selon une variante du mode de réalisation illustré par la figure 12;
la figure 14 est une coupe en élévation du dispositif selon un autre mode de réalisation de l'invention;
la figure 15 est une vue à plat d'un flan de tôle destiné à former une bague non tournante de roulement;
la figure 16 est une coupe diamétrale d'une bague non tournante formée à partir du flan de tôle de la figure 15;
les figures 17 à 19 sont des vues extérieures en élévation de trois variantes de pièces de liaison selon l'invention;
la figure 20 est une vue extérieure en élévation d'un mode de réalisation d'une bague non tournante selon l'invention;
la figure 21 est une coupe en élévation d'un mode de réalisation d'une pièce de liaison destinée à être associée à la bague non tournante de la figure 20;
la figure 22 est un demi-coupe en élévation d'un mode de réalisation du dispositif selon l'invention; et
la figure 23 est une vue à plat d'un flan de tôle destiné à former la bague non tournante du dispositif de la figure 22.

Tel qu'il est illustré sur les figures, le dispositif de manoeuvre d'embrayage est muni d'un dispositif de commande hydraulique comprenant une partie fixe 1 et une partie mobile 2. La partie fixe 1 est munie d'un alésage 3 et est, en général, montée sur un carter de boîte de vitesses non représenté. La partie fixe 1 comprend également une chambre annulaire 4 destinée à recevoir un fluide hydraulique introduit par un orifice 5.

La partie mobile 2 comprend un piston 6 entièrement logé dans la chambre annulaire 4 et capable de se déplacer selon la pression de fluide hydraulique qui lui est appliqué. Le piston 6 est muni d'un premier joint d'étanchéité 7 en contact avec la paroi intérieure 9 de la chambre annulaire 4 et un second joint d'étanchéité 8 en contact avec la paroi extérieure 10 de la chambre annulaire 4. La partie mobile 2 comprend un élément de poussée 11 capable de transmettre le mouvement axial du piston 6 au roulement de butée 12. Le mouvement axial de l'élément de poussée 11 vers l'extérieur de la partie fixe 1 est limité par un anneau élastique de maintien 13 disposé dans une gorge annulaire 14 de la partie fixe 1 et faisant saillie par rapport à la paroi intérieure 9.

Le roulement de butée 12 comprend une bague intérieure non tournante 15, une bague extérieure tournante 16, une rangée d'éléments tournants 17 sous forme de billes, une cage de maintien 18 des éléments roulants 17 et une garniture d'étanchéité 19 solidaire de la bague extérieure 16 et en contact de frottement avec la bague intérieure 15. Une surface radiale 15a de la bague intérieure est en contact avec un redan 11a de l'élément de poussée 11. L'élément de poussée 11 comprend également une extrémité libre 11b supportant une rondelle élastique 20 qui vient en appui contre la surface radiale 15b de la bague intérieure 15, opposée à la surface radiale 15a. La bague intérieure 15 est ainsi rendue axialement solidaire de l'élément de poussée 11. Un léger jeu radial est prévu entre la bague intérieure 15 et l'élément de poussée 11 afin de permettre un autocentrage du roulement de butée 12 par rapport à l'élément de poussée 11 et à la partie fixe 1.

La bague extérieure 16 du roulement de butée 12 est pourvue d'une surface radiale 16a en contact avec un élément du diaphragme d'embrayage 21.

Le dispositif hydraulique de manoeuvre d'embrayage comprend un ressort 22 de mise en précontrainte axiale du roulement 12 contre les éléments du diaphragme d'embrayage 21. Le ressort 22 est en appui, à son extrémité fixe, sur une rondelle métallique 23 solidaire de la partie fixe 1. La rondelle 23 est pourvue d'une portion cylindrique 23a pour empêcher tout mouvement radial de cette extrémité du ressort 22. L'extrémité mobile du ressort 22 est en appui contre une pièce de liaison 24, réalisée en matériau synthétique moulé et pourvue d'une surface radiale 24a de réception du ressort 22 et d'un alésage 24b de maintien radial du ressort 22.

La pièce de liaison 24 est en appui contre une surface radiale 15c de la bague intérieure 15 et est pourvue à proximité de la surface radiale 24a d'appui du ressort 22 d'une protubérance axiale formant une portion cylindrique annulaire 25. La portion cylindrique 25 est en contact avec une surface cylindrique 15d sur un alésage de la bague intérieure 15. L'extrémité libre de la portion cylindrique 25 est pourvue d'un bourrelet radial annulaire 26 faisant saillie vers l'extérieur et étant logé dans une gorge annulaire 27 de forme correspondante à celle du bourrelet 26 et pourvue sur la surface cylindrique 15d de la bague intérieure 15. La pièce de liaison 24 est ainsi axialement solidaire du roulement 12.

La pièce de liaison 24 comprend un ergot axial 28 faisant saillie en direction de la bague intérieure 15. L'ergot 28 est logé dans une encoche 29 creusée au niveau de la surface radiale 15c de la bague intérieure 15. La pièce de liaison 24 est ainsi angulairement solidaire de la bague intérieure 15 et de la partie fixe 1 par l'intermédiaire du ressort 22. La bague intérieure 15 est donc immobilisée angulairement par rapport à la partie fixe 1.

La pièce de liaison 24, étant en contact avec la partie arrière de la bague intérieure 15, est disposée concentriquement autour de l'élément de poussée 11 et en retrait axial par rapport à l'extrémité libre de celui-ci. Ainsi, l'encombrement axial de la pièce de liaison 24 n'a pas d'influence sur l'encombrement axial total du dispositif hydraulique de mnoeuvre d'embrayage.

Le dispositif de manoeuvre d'embrayage comprend un soufflet de protection 30, réalisé en matériau souple, par exemple en élastomère, de plus grand diamètre que le ressort 22 et enveloppant sensiblement celui-ci. L'extrémité fixe du soufflet 30 comprend un anneau 31 maintenu entre une extrémité radiale 23b de la rondelle 23 et la partie fixe 1.

L'extrémité mobile du soufflet 30 comprend un anneau 32 maintenu dans une gorge annulaire 33 prévue sur le diamètre extérieur de la pièce de liaison 24. Le soufflet 30 est capable de suivre les mouvements de la partie mobile 2 et d'éviter l'intrusion d'éléments extérieurs au contact du ressort 22 et généralement à l'intérieur de l'espace défini par le soufflet 30, la partie fixe 1 et la partie mobile 2.

Ainsi réalisé, le dispositif de manoeuvre d'embrayage fonctionne de la manière suivante : au repos, le ressort 22 applique une poussée sur la pièce de liaison 24 et le roulement 12. Le roulement 12 est donc en permanence en précontrainte axiale contre l'élément de diaphragme d'embrayage 21. Du fluide hydraulique est injecté dans la chambre annulaire 4 par l'orifice 5, provoquant le déplacement du piston 6 et plus généralement de la partie mobile 2 et de l'élément de diaphragme d'embrayage 21.

Avant le montage définitif du dispositif de manoeuvre d'embrayage, la pièce de liaison 24 formant siège d'appui du ressort 22 n'étant pas soumise à la poussée du ressort 22 reste accrochée à la bague intérieure 15 du roulement 12 grâce au moyen de solidarisation axiale formé par la portion cylindrique 25 et le bourrelet 26.

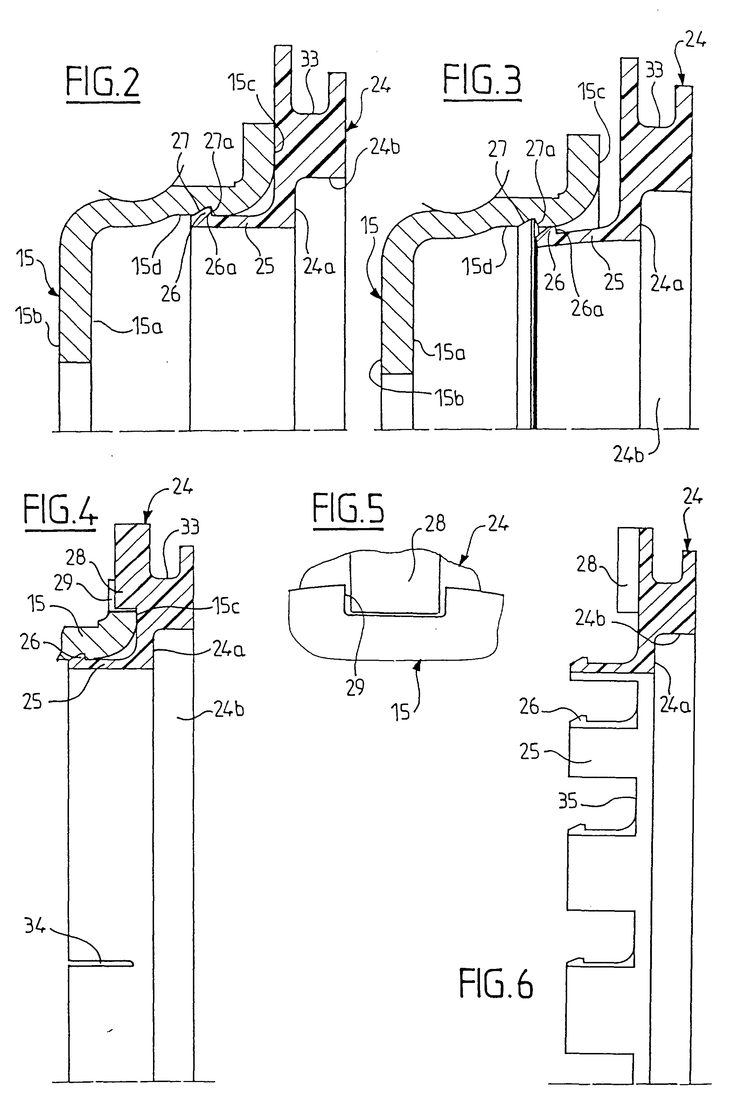

Les figures 2 et 3 illustrent une variante du dispositif de manoeuvre d'embrayage dans laquelle la pièce de liaison 24 est dépourvue d'ergot axial et la bague intérieure 15 d'encoche pour des raisons d'économie. La figure 2 montre la bague intérieure 15 et la pièce de liaison 24 après accrochage ou encliquetage du bourrelet 26 dans la gorge 27. La figure 3 montre la pièce de liaison 24 en cours de montage sur la bague intérieure 15. Le bourrelet 26 vient frotter contre la surface cylindrique 15d de l'alésage de la bague intérieure 15 ce qui provoque un retrait radial de la portion cylindrique 25 jusqu'au moment où le bourrelet atteint la gorge 27 et vient prendre place à l'intérieur de celle-ci. Le bourrelet 26 est pourvu d'une surface radiale 26a en contact avec une surface correspondante 27a de la gorge 27 de la bague intérieure 15.

Comme on le voit plus particulièrement sur la figure 4, la pièce de liaison 24 comprend une portion cylindrique 25 scindée en plusieurs secteurs par des fentes 34 ce qui confère à la portion cylindrique 25 une certaine souplesse dans le sens radial.

Sur la figure 5, on voit l'ergot 28 de la pièce de liaison 24 logé dans l'encoche 29 de la bague intérieure 15 et assurant ainsi la solidarisation angulaire de la pièce de liaison 24 et de la bague intérieure 15.

Sur la figure 6, les éléments semblables à ceux des figures précédentes portent les mêmes références. Dans cette variante, la portion cylindrique 25 est scindée en plusieurs secteurs. Les fentes séparant les secteurs sont remplacées par des créneaux 35. Cette variante favorise la souplesse radiale de la portion cylindrique 25 qui se présente sous forme d'une couronne de languettes axiales.

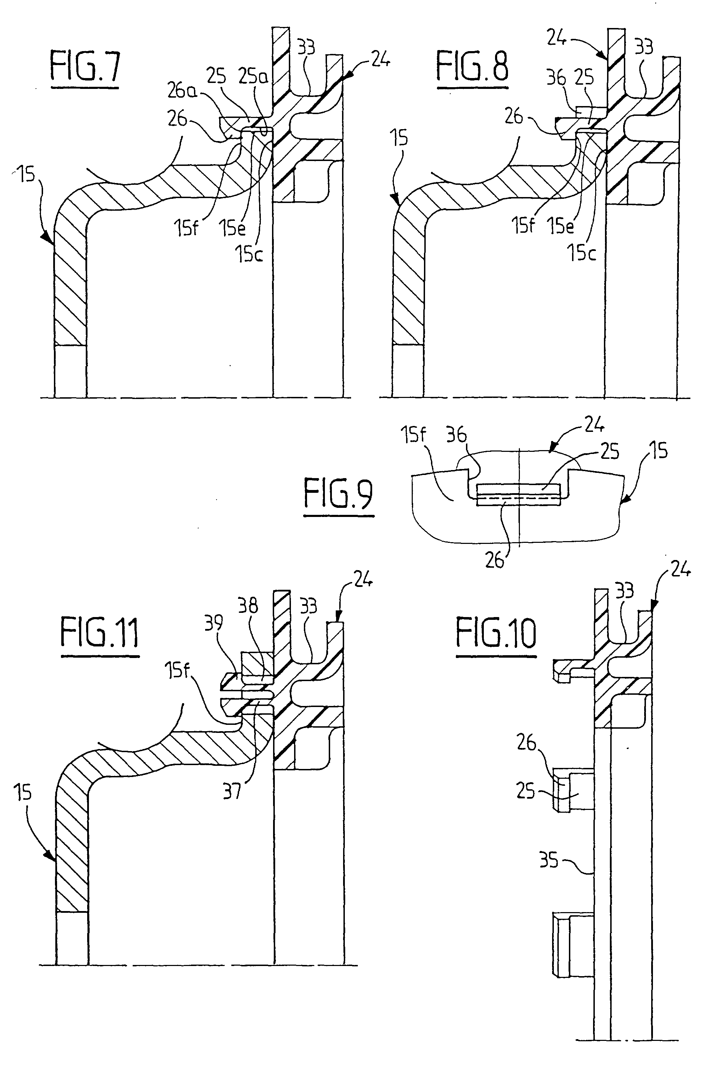

Sur les figures 7 à 10, les éléments semblables à ceux des figures précédentes portent les mêmes références. Les portions cylindriques 25 sont pourvues sur leur alésage 25a du bourrelet 26. Les portions cylindriques 25 sont en contact avec un diamètre extérieur 15e de la bague intérieure 15. Les portions cylindriques 25 ont une longueur légèrement supérieure à l'épaisseur de la tôle formant la bague intérieure 15 de façon à ce que la surface radiale 26a du bourrelet 26 vienne en contact avec la surface radiale 15f de la bague intérieure 15, adjacente au diamètre extérieur 15e et opposée à 1a surface radiale 15c.

Les figures 8, 9 et 10 montrent une variante du mécanisme de manoeuvre d'embrayage où la pièce de liaison 24 est identique à celle représentée sur la figure 7. La bague intérieure 15 est pourvue d'encoches 36 prévues sur le diamètre extérieur 15e, chacune pouvant recevoir un secteur de la portion cylindrique 25.

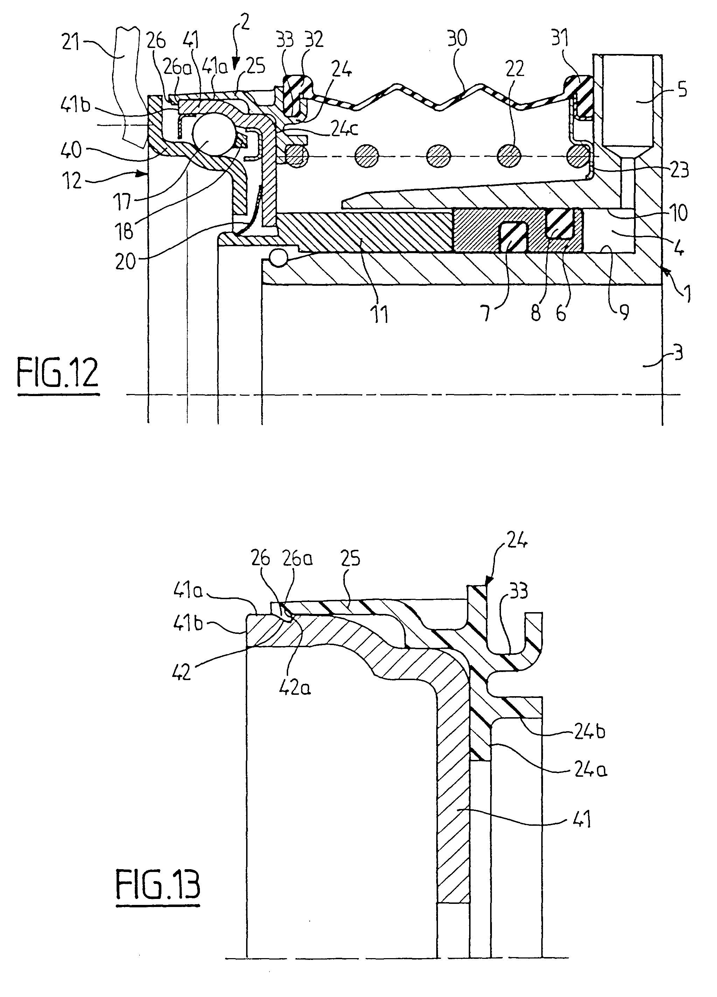

Dans la variante illustrée par la figure 11, la bague intérieure 15 est pourvue à son extrémité de plus grand diamètre de plusieurs trous traversants cylindriques 38. La pièce de liaison 24 est pourvue de pions 37 formant portions cylindriques, en nombre correspondant à celui des trous 38 de la bague intérieure 15. Les pions 37 sont fendus axialement et pourvus d'un bourrelet 39. Ainsi, lors du montage de la pièce de liaison 24 sur la bague intérieure 15, la pièce de liaison 24 est présentée face à la bague intérieure 15 de façon à ce que les pions 37 soient disposés en face de leurs trous 38 respectifs. Puis la pièce de liaison 24 est rapprochée de la bague intérieure 15, les pions 37 se rétreignent en traversant les trous 38 puis s'expandent radialement, les bourrelets 39 venant en contact du bord des trous 38 situé sur la surface radiale 15f de la bague intérieure 15.

Sur la figure 12, le roulement comprend une bague intérieure tournante 40 et une bague extérieure 41 non tournante. La pièce de liaison 24 est adaptée à la bague extérieure 41 et comprend une surface radiale 24c en contact avec une surface radiale de la bague extérieure 41, une portion cylindrique 25 comportant des secteurs en contact avec le diamètre extérieur 41a de la bague extérieure 41 et, à l'extrémité libre des secteurs de la portion cylindrique 25, un bourrelet 26 formant griffe muni d'une surface radiale 26a en contact avec une surface radiale 41b correspondante de la bague extérieure 41. La surface radiale 41b de la bague extérieure 41 étant formée par l'épaisseur de la tôle emboutie pour former la bague extérieure 41.

La figure 13 montre une variante de la figure 12 où la pièce de liaison 24 comprend une portion cylindrique 25 comportant des secteurs plus courts que sur la figure 11 et munis à leur extrémité libre d'un bourrelet 26 formant griffe et venant s'accrocher dans une gorge annulaire 42 pourvue d'une surface radiale 42a destinée à coopérer avec la surface radiale 26a du bourrelet 26. La gorge annulaire 42 est agencée sur le diamètre extérieur 41a de la bague extérieure 41.

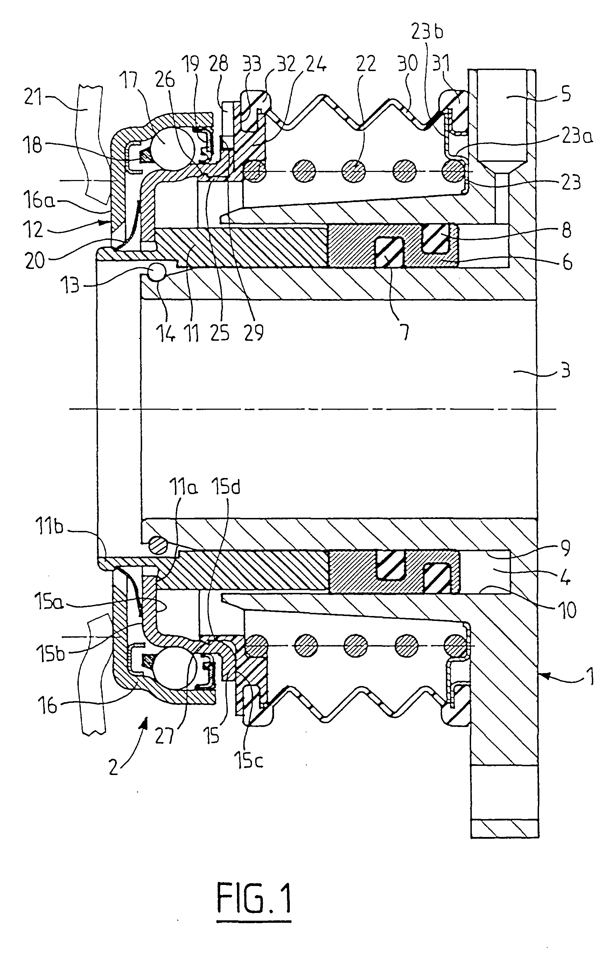

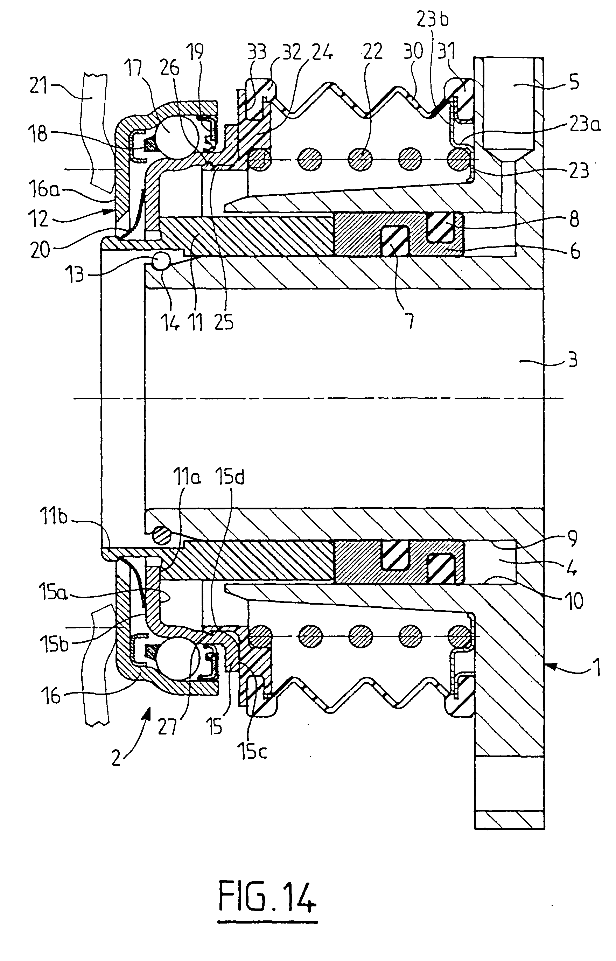

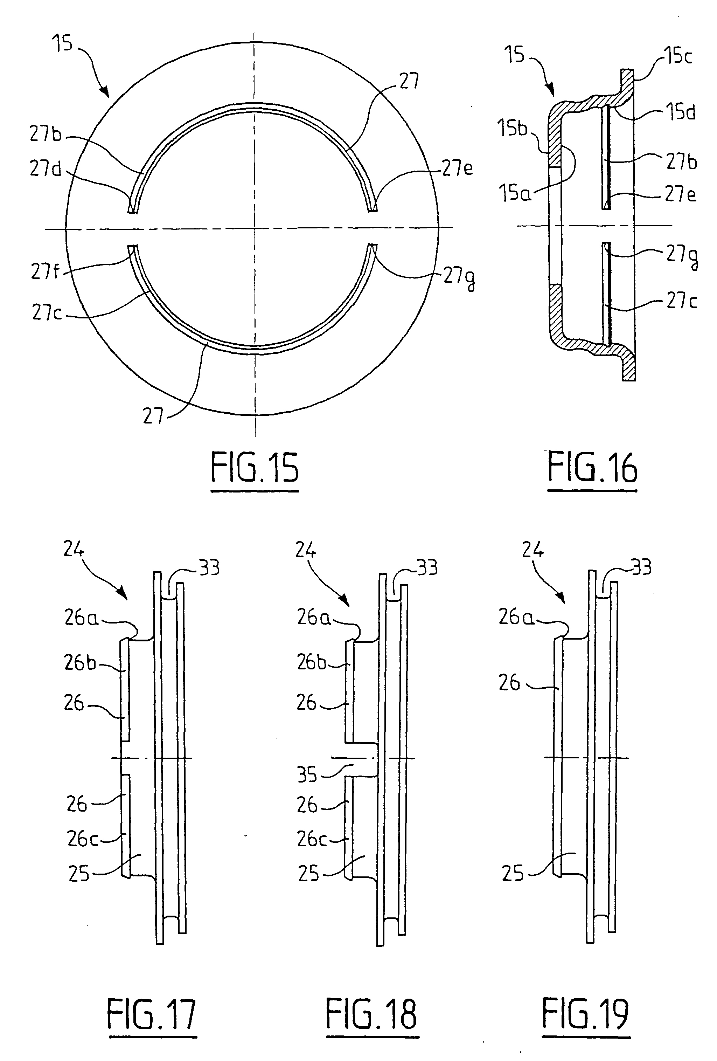

Les figures 15 et 16 montrent une variante d'une bague non tournante 15 destinée à être montée dans un dispositif de manoeuvre d'embrayage tel qu'illustré sur la figure 14. Ce dipositif de manoeuvre d'embrayage est identique à celui de la figure 1 à ceci près que la pièce de liaison 24 est dépourvue d'ergot, la bague non tournante 15 est dépourvue d'encoche au niveau de sa surface radiale 15c et la rainure 27 est discontinue comme il sera expliqué plus loin. Sur la figure 15, un flan de tôle plane est découpé puis on aménage par estampage une rainure circulaire 27 dans la surface plane du flan. La rainure circulaire 27 est interrompue en deux endroits de façon à former deux portions de rainure 27b, 27c limitées par des extrémités de rainure 27d, 27e, 27f et 27g. Puis en emboutit le flan pour donner à la bague 15 sa forme définitive et amener les portions de rainure 27b, 27c à leur position axiale souhaitée par rapport à la surface radiale 15c de la bague non tournante 15 (figure 16). Ce procédé de fabrication sans enlèvement de copeaux est particulièrement économique et évite d'éventuelles opérations de reprise de la bague non tournante 15.

Bien entendu, ce procédé peut s'appliquer à la fabrication d'une bague avec rainure annulaire continue.

Sur la figure 17, la pièce de liaison 24 comprend une portion cylindrique 25 continue et munie d'un bourrelet 26 discontinu. Le bourrelet 26 est scindé en deux portions 26b, 26c de dimensions correspondantes aux portions de rainure 27b, 27c de la bague non tournante 15 illustrée sur la figure 15. Ainsi, lors du montage du dispositif de manoeuvre d'embrayage, on assemble la bague non tournante 15 et la pièce de liaison 24 par un mouvement axial. Au passage dans l'alésage 15d, le bourrelet 26 se rétreint grâce à la souplesse de la portion cylindrique 25, puis vient s'encliqueter dans les portions de rainure 27b, 27c en solidarisant axialement et angulairement la pièce de liaison 24 et la bague non tournante 15.

La pièce de liaison 24 illustrée sur la figure 18 est très proche de celle illustrée sur la figure 6, la portion cylindrique 25 étant scindée en deux secteurs séparée par des créneaux 35. Cette variante favorise la souplesse radiale de la portion cylindrique 25 et facilite donc l'assemblage de la bague non tournante 15 et de la pièce de liaison 24.

La pièce de liaison 24 illustrée sur la figure 19, comprend une portion cylindrique 25 continue avec un bourrelet 26 continu. On peut ainsi assembler sans orientation angulaire la pièce de liaison 24 et la bague non tournante 15. L'élasticité propre de la pièce de liaison 24, en particulier de la portion cylindrique 25 permet au bourrelet annulaire 26 de venir à la fois serrer l'alésage 15d de la bague non tournante 15 dans les zones ne comportant pas de portions de rainure 27b, 27c et se loger dans les portions de rainure 27b, 27c dans les zones où ces portions 27b, 27c sont prévues. La solidarisation angulaire de la pièce de liaison 24 et de la bague non tournante 15 est donc assurée.

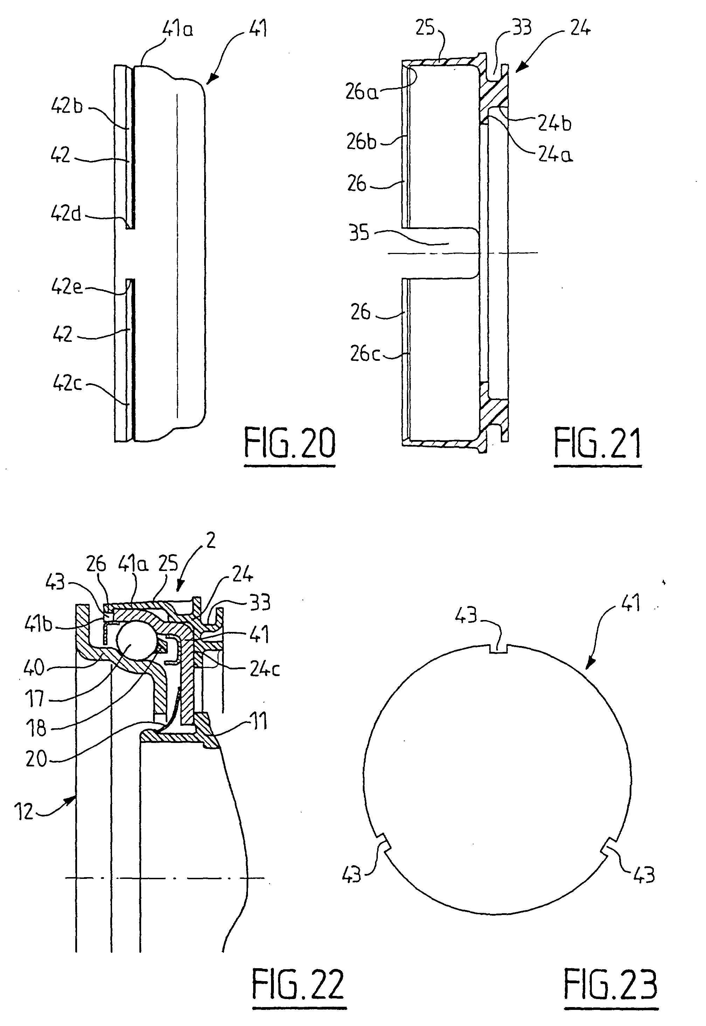

Sur la figure 20, la bague non tournante 41 est proche de celle illustrée sur la figure 13 à ceci près que la rainure 42 prévue sur la surface cylindrique extérieure 41a est scindée en deux portions de rainure 42b, 42c. Les portions de rainure 42b, 42c sont limitées par des extrémités 42d, 42e et sont destinées à recevoir les portions 26b, 26c du bourrelet 26 des deux secteurs de la portion cylindrique 25 de la pièce de liaison 24 illustrée sur la figure 21. Les secteurs de la portion cylindrique 25 sont de dimensions adaptées aux portions de rainure 42b, 42c. Les extrémités 42d, 42e des portions de rainure 42b, 42c peuvent servir de surfaces de butée permettant la solidarisation angulaire de la bague non tournante 41 et de la pièce de liaison 24.

Le dispositif de manoeuvre d'embrayage illustré sur la figure 22 est proche de celui de la figure 12 à ceci près que la bague non tournante 41 comprend trois encoches 43 disposées sur sa surface radiale d'extrémité 41b. La portion cylindrique 25 de la pièce de liaison 24 comprend trois portions de bourrelet 26 de dimensions adaptées pour se loger dans les encoches 43 et assurer ainsi à la fois la solidarisation axiale et la solidarisation radiale de la bague non tournante 41 et de la pièce de liaison 24.

La bague non tournante 41 peut être fabriquée de la façon suivante : on découpe un flan de tôle plane, on procède à la découpe des encoches 43 par poinçonnage (figure 23), ou à l'estampage de la rainure circulaire 42 continue ou discontinue (figure 20), puis on emboutit le flan de tôle plane pour donner à la bague non tournante 41 sa forme définitive.

Ainsi réalisé, le dispositif hydraulique de manoeuvre d'embrayage comprend un nombre de pièces largement réduit et évite tout déplacement intempestif de la pièce de liaison par rapport au roulement avant le montage de l'ensemble. La pièce de liaison sert de siège d'appui du ressort, de moyen de solidarisation axiale et angulaire avec le roulement, et de support à une extrémité du soufflet.

## Revendications

1. Dispositif de manoeuvre d'embrayage du type comprenant un roulement de butée (12), muni d'une bague non tournante (15) et d'une bague tournante (16), capable d'agir sur un diaphragme de mécanisme d'embrayage, un dispositif de commande hydraulique pourvu d'une partie fixe (1) solidarisée avec un carter et une partie mobile axialement (2) capable de déplacer le roulement de butée (12) par rapport au mécanisme d'embrayage, un moyen de mise en précontrainte axiale (22) du roulement de butée (12) contre le diaphragme, une pièce de liaison (24) formant siège d'appui du moyen de mise en précontrainte axiale (22), et un soufflet de protection (30) disposé entre une partie mobile et une partie fixe du dispositif, **caractérisé en ce que** la pièce de liaison (24), disposée entre le roulement (12) et ledit moyen de mise en précontrainte axiale (22), comprend des moyens de solidarisation axiale comprenant au moins une portion cylindrique élastique (25), munie à une extrémité libre s'étendant en direction du roulement (12), d'un bourrelet annulaire (26) capable de solidariser axialement ladite pièce de liaison et la bague non tournante et pourvu d'une surface radiale (26a) en contact avec une surface radiale correspondante de la bague non tournante (15), et des moyens de solidarisation angulaire avec la bague non tournante (15) du roulement de butée (12).

2. Dispositif de manoeuvre selon la revendication 1, **caractérisé en ce que** la pièce de liaison (24) est montée concentriquement à un élément de poussée (11) de la partie mobile (2) et de façon à être en retrait axialement par rapport à l'extrémité libre dudit élément de poussée (11).

3. Dispositif de manoeuvre selon l'une quelconque des revendications précédentes, **caractérisé en ce que** la pièce de liaison (24) est en contact avec une surface radiale (15c) de la bague non tournante (15) et la portion cylindrique (25) de la pièce de liaison (24) est en contact avec une surface cylindrique de la bague non tournante (15).

4. Dispositif de manoeuvre selon l'une quelconque des revendications 1 à 3, **caractérisé en ce que** la portion cylindrique (25) est en contact avec un alésage de la bague non tournante (15), le bourrelet (26) étant logé dans une rainure annulaire (27) dudit alésage.

5. Dispositif de manoeuvre selon la revendication 4, **caractérisé en ce que** la rainure (27) est fabriquée par estampage à plat d'un flan de tôle puis emboutissage.

6. Dispositif de manoeuvre selon l'une quelconque des revendications 1 à 3, **caractérisé en ce que** la portion cylindrique (25) est en contact avec un diamètre extérieur de la bague non tournante (15).

7. Dispositif de manoeuvre selon la revendication 6, **caractérisé en ce que** la portion cylindrique (25) est munie d'une pluralité de portions de bourrelet (26) coopérant avec des encoches (43) de la bague non tournante (15).

8. Dispositif de manoeuvre selon l'une quelconque des revendications 1 à 7, **caractérisé par** une portion cylindrique (25) scindée en une pluralité de secteurs séparés par des fentes axiales (34).

9. Dispositif de manoeuvre selon l'une quelconque des revendications 1 à 7, **caractérisé par** une portion cylindrique (25) scindée en une pluralité de secteurs formant des languettes axiales et séparés par des créneaux (35).

10. Dispositif de manoeuvre selon l'une quelconque des revendications précédentes, **caractérisé en ce que** la bague non tournante (15) est pourvue d'une rainure annulaire (27) discontinue et scindée en portions de rainure (27b, 27c), les extrémités (27d, 27c, 27f, 27g) des portions de rainure formant des butées de solidarisation angulaire avec le bourrelet (26) des secteurs de la portion cylindrique (25).

11. Dispositif de manoeuvre selon l'une quelconque des revendications précédentes, **caractérisé en ce que** le moyen de solidarisation angulaire comprend un ergot axial (28) coopérant avec une encoche (29) de la bague non tournante (15).

12. Dispositif de manoeuvre selon l'une quelconque des revendications 1 à 10, **caractérisé en ce que** le moyen de solidarisation angulaire comprend au moins un secteur de la portion cylindrique (25) coopérant avec au moins une encoche (36) de la bague non tournante.

13. Dispositif de manoeuvre selon la revendication 1 ou 2, **caractérisé en ce que** chaque portion cylindrique comprend un pion (37) axial fendu destiné à coopérer avec un trou (38) de la bague non tournante (15), chaque pion (37) étant capable de se rétreindre pour rentrer dans le trou (38) correspondant puis de s'expandre radialement en assurant la solidarisation axiale et angulaire de la pièce de liaison (24) avec la bague non tournante (15).

14. Dispositif de manoeuvre selon l'une quelconque des revendications précédentes, **caractérisé en ce que** la bague intérieure du roulement est non tournante.

15. Dispositif de manoeuvre selon l'une quelconque des revendications 1 à 13, **caractérisé en ce que** la bague extérieure du roulement est non tournante.

16. Dispositif de manoeuvre selon l'une quelconque des revendications précédentes, **caractérisé en ce que** la pièce de liaison (24) est réalisée en matériau synthétique moulé.

17. Dispositif de manoeuvre selon l'une quelconque des revendications précédentes, **caractérisé en ce que** la pièce de liaison comprend une gorge annulaire (33) de solidarisation avec le soufflet (30).

## Patentansprüche

1. Kupplungsausrückvorrichtung zu der gehören: ein Ausrücklager (12) mit einem stillstehenden Ring (15) und einem umlaufenden Ring (16), der in der Lage ist, auf eine Membranfeder der Kupplungsvorrichtung zu wirken, eine hydraulische Betätigungsvorrichtung, die einen feststehenden Abschnitt (1), der an einem Gehäuse befestigt ist, und einen in axialer Richtung verschieblichen Abschnitt (2) aufweist, der in der Lage ist, das Ausrücklager (12) gegenüber der Kupplungsvorrichtung zu verschieben, ein axiales Vorspannmittel (22), das das Ausrücklager (12) gegen die Membranfeder vorspannt, ein Verbindungsstück (24), das als ein Widerlager für das axiale Vorspannmittel (22) dient, und eine Schutzmanschette (30), die zwischen einem verschieblichen Abschnitt und einem festen Abschnitt der Vorrichtung angeordnet ist, **dadurch gekennzeichnet, dass** das zwischen dem Lager (12) und dem axialen Vorspannmittel (22) angeordnete Verbindungsstück (24) Mittel zur axialen Befestigung umfasst, zu denen mindestens gehören: ein zylindrischer, elastischer Abschnitt (25), der an einem freien, sich in Richtung des Lagers (12) erstreckenden Ende vorgesehen ist, ein ringförmiger Wulst (26), der geeignet ist, das Verbindungsstück und den stillstehenden Ring in axialer Richtung aneinander zu sichern, und der mit einer Radialfläche (26a) versehen ist, die in Berührung mit einer entsprechenden Radialfläche des stillstehenden Rings (15) steht, und Mittel, die einer Befestigung in Umfangsrichtung mit dem stillstehende Ring (15) des Ausrücklagers (12) dienen.

2. Ausrückvorrichtung nach Anspruch 1, **dadurch gekennzeichnet, dass** das Verbindungsstück (24) konzentrisch an einem Druckelement (11) des verschieblichen Abschnitts (2) angebracht ist, und zwar derart, dass das Verbindungsstück (24) bezüglich des freien Endes des Druckelements (11) in axialer Richtung zurückgesetzt angeordnet ist.

3. Ausrückvorrichtung nach einem der vorhergehenden Ansprüche, **dadurch gekennzeichnet, dass** das Verbindungsstück (24) mit einer Radialfläche (15c) des stillstehenden Rings (15) in Berührung steht und der zylindrische Abschnitt (25) des Verbindungsstücks (24) mit einer zylindrischen Fläche des stillstehenden Rings (15) in Berührung steht.

4. Ausrückvorrichtung nach einem der Ansprüche 1 bis 3, **dadurch gekennzeichnet, dass** der zylindrische Abschnitt (25) mit einer Bohrung des stillstehenden Rings (15) in Berührung steht, wobei der Wulst (26) in einer ringförmigen Ringnut (27) der Bohrung zu liegen kommt.

5. Ausrückvorrichtung nach Anspruch 4, **dadurch gekennzeichnet, dass** die Ringnut (27) hergestellt wird, indem aus einem Blech eine Scheibe ausgestanzt wird, die anschließend entsprechend umgeformt wird.

6. Ausrückvorrichtung nach einem der Ansprüche 1 bis 3, **dadurch gekennzeichnet, dass** der zylindrische Abschnitt (25) in Berührung mit einer Außenumfangsfläche des stillstehenden Rings (15) steht.

7. Ausrückvorrichtung nach Anspruch 6, **dadurch gekennzeichnet, dass** der zylindrische Abschnitt (25) mit einer Vielzahl von Wulstabschnitten (26) versehen ist, die mit Ausnehmüngen (43) des stillstehenden Rings (15) zusammenwirken.

8. Ausrückvorrichtung nach einem der Ansprüche 1 bis 7, **dadurch gekennzeichnet, dass** ein zylindrischer Abschnitt (25) in eine Vielzahl von Sektoren unterteilt ist, die durch axiale Schlitze (34) getrennt sind.

9. Ausrückvorrichtung nach einem der Ansprüche 1 bis 7, **dadurch gekennzeichnet, dass** ein zylindrischer Abschnitt (25) in eine Vielzahl von Sektoren in Gestalt von axialen Zungen unterteilt ist, die wie Zinnen durch Ausnehmungen (35) voneinander getrennt sind.

10. Ausrückvorrichtung nach einem der vorhergehenden Ansprüche, **dadurch gekennzeichnet, dass** der stillstehende Ring (15) mit einer in Ringnutabschnitte (27b, 27c) unterteilten, diskontinuierlichen Ringnut (27) versehen ist, wobei die Enden (27d, 27c, 27f, 27g) der Ringnutabschnitte zusammen mit den Wülsten (26) der Sektoren des zylindrischen Abschnitts (25) Befestigungswiderlager in Umfangsrichtung bilden.

11. Ausrückvorrichtung nach einem der vorhergehenden Ansprüche, **dadurch gekennzeichnet, dass** das in Umfangsrichtung wirkende Mittel zur Befestigung eine axiale Nase (28)umfasst, die mit einer Ausnehmung (29) des stillstehenden Rings (15) zusammenwirkt.

12. Ausrückvorrichtung nach einem der Ansprüche 1 bis 10, **dadurch gekennzeichnet, dass** das in Umfangsrichtung wirkende Befestigungsmittel mindestens einen Sektor auf dem zylindrischen Abschnitt (25) aufweist, der mit mindestens einer Ausnehmung (36) des stillstehenden Rings zusammenwirkt.

13. Ausrückvorrichtung nach Anspruch 1 oder 2, **dadurch gekennzeichnet, dass** jeder zylindrische Abschnitt einen in axialer Richtung geschlitzten Zapfen (37) umfasst, der dazu dient, mit einer Öffnung (38) des stillstehenden Rings (15) zusammenzuwirken, wobei ein jeder der Zapfen (37) in der Lage ist, nachzugeben, um das Einführen in die jeweilige Öffnung (38) zu ermöglichen, um sich anschließend in radialer Richtung auszudehnen, und damit für die axiale und radiale Befestigung des Verbindungsstücks (24) mit dem stillstehenden Ring (15) zu sorgen.

14. Ausrückvorrichtung nach einem der vorhergehenden Ansprüche, **dadurch gekennzeichnet, dass** der Innenring des Lagers stillstehend ist.

15. Ausrückvorrichtung nach einem der Ansprüche 1 bis 3, **dadurch gekennzeichnet, dass** der Außenring des Lagers stillstehend ist.

16. Ausrückvorrichtung nach einem der vorhergehenden Ansprüche, **dadurch gekennzeichnet, dass** das Verbindungsstück (24) aus Kunststoff gespritzt ist.

17. Ausrückvorrichtung nach einem der vorhergehenden Ansprüche, **dadurch gekennzeichnet, dass** das Verbindungsstück eine Ringnut (33) für die Befestigung der Schutzmanschette (30) aufweist.

## Claims

1. Clutch actuating device of the type comprising a thrust rolling bearing (12) equipped with a non-rotating race (15) and with a rotating race (16), capable of acting on a clutch mechanism diaphragm, a hydraulic actuating device provided with a fixed part (1) secured to a casing and an axially movable part (2) capable of moving the thrust rolling bearing (12) with respect to the clutch mechanism, a means (22) for axially preloading the thrust rolling bearing (12) against the diaphragm, a connecting piece (24) forming a seat for the axial-preload means (22), and a protective gaiter (30) arranged between a moving part and a fixed part of the device, **characterized in that** the connecting piece (24), arranged between the rolling bearing (12) and the said axial-preload means (22), comprises means of axial securing comprising at least one elastic cylindrical portion (25) equipped, at a free end extending in the direction of the rolling bearing (12), with an annular bulge (26) capable of axially securing the said connecting piece and the non-rotating race and provided with a radial surface (26a) in contact with a corresponding radial surface of the non-rotating race (15), and means for angular securing to the non-rotating race (15) of the thrust rolling bearing (12).

2. Operating device according to Claim 1, **characterized in that** the connecting piece (24) is mounted concentrically with a thrust element (11) of the moving part (2) and in such a way as to be set back axially with respect to the free end of the said thrust element (11).

3. Operating device according to either one of the preceding claims, **characterized in that** the connecting piece (24) is in contact with a radial surface (15c) of the non-rotating race (15) and the cylindrical portion (25) of the connecting piece (24) is in contact with a cylindrical surface of the non-rotating race (15).

4. Operating device according to any one of claims 1 to 3, **characterized in that** the cylindrical portion (25) is in contact with a bore of the non-rotating race (15), the bulge (26) being housed in an annular slot (27) of the said bore.

5. Operating device according to Claim 4, **characterized in that** the slot (27) is produced by flat stamping a sheet metal blank followed by drawing.

6. Operating device according to any one of Claims 1 to 3, **characterized in that** the cylindrical portion (25) is in contact with an outside diameter of the non-rotating race (15).

7. Operating device according to Claim 6, **characterized in that** the cylindrical portion (25) is equipped with a number of bulge portions (26) collaborating with notches (43) of the non-rotating race (15).

8. Operating device according to any one of Claims 1 to 7, **characterized by** a cylindrical portion (25) split into a number of sectors separated by axial slits (34).

9. Operating device according to any one of Claims 1 to 7, **characterized by** a cylindrical portion (25) split into a number of sectors forming axial tabs and separated by crenels (35).

10. Operating device according to any one of the preceding claims, **characterized in that** the non-rotating race (15) is provided with a discontinuous annular slot (27) which is split into slot portions (27b, 27c), the ends (27d, 27e, 27f, 27g) of the slot portions forming abutments for angular securing to the bulge (26) of the sectors of the cylindrical portion (25).

11. Operating device according to any one of the preceding claims, **characterized in that** the angular securing means comprises an axial lug (28) collaborating with a notch (29) of the non-rotating race (15).

12. Operating device according to any one of claims 1 to 10, **characterized in that** the angular securing means comprises at least one sector of the cylindrical portion (25) collaborating with at least one notch (36) of the non-rotating race.

13. Operating device according to Claim 1 or 2, **characterized in that** each cylindrical portion comprises a split axial stud (37) designed to collaborate with a hole (38) in the non-rotating race (15), each stud (37) being capable of contracting to enter the corresponding hole (38) then of expanding radially to axially and angularly secure the connecting piece (24) to the non-rotating race (15).

14. Operating device according to any one of the preceding claims, **characterized in that** the inner race of the bearing is non-rotating.

15. Operating device according to any one of Claims 1 to 13, **characterized in that** the outer race of the bearing is non-rotating.

16. Operating device according to any one of the preceding claims, **characterized in that** the connecting piece (24) is made of moulded synthetic material.

17. Operating device according to any one of the preceding claims, **characterized in that** the connecting piece comprises an annular groove (33) for securing to the gaiter (30).
